# EUROPÄISCHE PATENTSCHRIFT

(11) **EP 2 529 529 B1**
(45) Veröffentlichungstag und Bekanntmachung des Hinweises auf die Patenterteilung: **14.03.2018**
(21) Anmeldenummer: 10787356.4
(22) Anmeldetag: 25.11.2010
(51) Int. Cl.: H04L 29/06, H04L 29/08

(54) **VERFAHREN ZUM GESICHERTEN DOWNLOAD VON VERTEILTEN DOWNLOADSOURCEN**
METHOD FOR SECURELY DOWNLOADING FROM DISTRIBUTED DOWNLOAD SOURCES
PROCÉDÉ DE TÉLÉCHARGEMENT SÉCURISÉ DE SOURCES DE TÉLÉCHARGEMENT RÉPARTIES

(30) Priorität: 27.01.2010 DE 102010006008
(43) Veröffentlichungstag der Anmeldung: 05.12.2012
(73) Patentinhaber: Artec Computer GmbH, 61184 Karben (DE)
(72) Erfinder: ARTISHDAD, Jerry John, 61184 Karben (DE); HETT, Christian, 61194 Niddatal (DE)
(74) Vertreter: Meyer-Dulheuer, Karl-Hermann
(86) Internationale Anmeldenummer: PCT/EP2010/068252
(87) Internationale Veröffentlichungsnummer: WO 2011/091887

(56) Entgegenhaltungen:
- US-A1- 2004 172 476
- US-B1- 6 772 337

## Beschreibung

Die vorliegende Erfindung befasst sich mit einem Verfahren zum gesicherten Download von verteilten Downloadsourcen. Dabei wird eine größtmögliche Sicherheit für den Download bei gleichzeitig minimierter Serverlast erzielt.

Wenn für einen oder insbesondere eine Vielzahl von Clients eine oder mehrere Dateien zum Download bereit gestellt werden sollen, ist es üblich, die Downloaddateien nicht nur auf einem Server vorzuhalten, sondern sie auf mehreren Servern zu platzieren, damit eine Lastverteilung und größere zur Verfügung stehende Bandbreite erzielt werden kann.

Müssen die Dateien gegebenenfalls verschlüsselt und gesichert übertragen werden, damit sie vor unbefugtem Zugriff, Manipulation und nicht autorisierter Einsicht geschützt sind, dann müssen nach den allgemein bekannten Verfahren alle Server, die die Dateien bereit halten, zumindest über die Möglichkeit eines gesicherten Verbindungsaufbaus verfügen, sofern die Dateien vor der Verteilung auf die Server bereits verschlüsselt worden sind. Bei der Verteilung der Dateien auf mehrere Server zur Erzielung einer Lastverteilung und höheren Bandbreite ist es somit nicht möglich, auf besonders günstig anzumietenden Speicherplatz auf einfachen Servern ohne gesicherten Verbindungsaufbau zurückzugreifen.

Ferner wird durch den Aufbau einer gesicherten Verbindung erheblich mehr CPU-Last auf dem Server erzeugt als bei einer ungesicherten Verbindung, da der Server die Verschlüsselung für jede Verbindung während der Übertragung berechnen muss. Somit sind bei einer Vielzahl an auftretenden Verbindungen sehr leistungsfähige Server notwendig, um die geforderte Rechenleistung zur Verfügung stellen zu können.

Aus dem Stand der Technik sind diverse Verfahren bekannt, die sich mit dem Download von verteilten Downloadsourcen beschäftigen. So wird in der US 2004/0172476 A1 beispielsweise ein Verfahren beschrieben, bei dem über mehrere Kanäle parallel Daten auf einen Downloadrequest hin zur Verfügung gestellt werden. Dabei wird über ein Priorisierungssystem sowohl eine Lastverteilung als auch eine flexible Anpassung an Latenzzeiten- und Übertragungsratenschwankungen erzielt.

Aus der US 6 772 337 B1 ist ein Verfahren bekannt, bei dem der Aspekt auf einem vor Angreifern gesicherten Verfahren zum Transfer von auf mehrere Server verteilten Dateistücken liegt. Die bereitgestellten Dateien werden dazu in kleinere Einheiten unterteilt und deren Anordnung geändert. Die umsortierten Teilstücke und gegebenenfalls mit sogenannten "junk elements" aufgefüllten Daten werden dann in Datenblocks aufgeteilt und auf mehrere Server verteilt, wo sie zum Download bereit stehen. Eine zentraler Koordinationsserver verwaltet dieVerschlüsselungsinformationen und übergibt auf Anfragen der Clients eine Liste der Downloadquellen und die Schlüsselinformationen zur Rekonstruktion der Dateien durch die Clients.

Ausgehend von den beschriebenen Nachteilen der bekannten Verfahren zum gesicherten Download von verteilten Downloadsourcen war es die Aufgabe der vorliegenden Erfindung, ein verbessertes Downloadverfahren zur Verfügung zu stellen, das es erlaubt, auch einfache Server ohne Möglichkeit zum Aufbau einer gesicherten Verbindung als Downloadserver einzusetzen und die Gesamt-CPU-Last der beteiligten Server zu minimieren, wobei die Sicherheit der Datei-übertragung im Vergleich zu einem Download von einem einzigen Server über eine gesicherte Verbindung gleich gehalten werden kann.

Gelöst wird diese Aufgabe durch das erfindungsgemäße Verfahren zum gesicherten Download von verteilten Downloadsourcen, mindestens beinhaltend die Schritte:
- Generierung eines eindeutigen Identifiers für jeden Client;
- Speicherung der eindeutigen Identifier in einer Datenbank auf einem gesicherten Datenbank-Server;
- Zusammenstellen der Dateien für den Download;
- Packen der Dateien in eine Archivdatei;
- Generierung eines Hashwertes für die Archivdatei und Signatur der Archivdatei unter Nutzung desselben;
- Aufteilung der signierten Archivdatei in ein oder mehrere Teilstücke;
- Generierung eines Hashwertes für jedes Teilstück;
- Symmetrische Verschlüsselung der ein oder mehreren Teilstücke der signierten Archivdatei und Hinzufügen des verwendeten Schlüssels zu den Informationen über die zu ladenden Teilstücke in dem übermittelten Datenpaket;
- Bereitstellen der ein oder mehreren Teilstücke zum Download auf 1 bis n ungesicherten Download-Servern, wobei die ungesicherten Download-Server die symmetrisch verschlüsselten Pakete in vordefinierten Zeitintervallen neu verschlüsseln, wobei die dazu eingesetzten Schlüssel bevorzugt ein kryptographisch gesichertes Aktualitätsmerkmal tragen, welches insbesondere durch Errechnung des neuen Schlüssels aus einem dem Haupt-Server und dem Download-Server gemeinsam bekannten Schlüssel und dem Tagesdatum, welches zusätzlich mit der aktuellen Uhrzeit ergänzt werden kann, erzeugt wird;
- Anforderung des Downloads durch einen Client bei einem gesicherten Haupt-Server über eine gesicherte Verbindung, insbesondere eine HTTPS- oder SSL-Verbindung, wobei sich der Client beim Haupt-Server mit seinem eindeutigen Identifier identifiziert;
- Authentifizierung des Clients durch den Haupt-Server mittels Vergleich des übertragenen Identifiers mit den in der Datenbank als berechtigt hinterlegten Clients;
- Verknüpfung von i) Informationen zur Gesamtlänge der signierten Archivdatei, wobei die Angabe der Informationen zur Gesamtlänge auch implizit durch eine deren Berechnung gestattende Angabe aller Teilstücklängen erfolgen kann, und ii) deren Hashwert, wobei die Angabe des Hashwerts entfallen kann, wenn die Hashwerte aller Teilstücke in Punkt iii) enthalten sind, mit iii) Informationen über die zu ladenden Teilstücke zu einem Datenpaket und Verschlüsselung und/oder Signatur des erzeugten Datenpakets, wobei die Informationen über die zu ladenden Teilstücke für jedes Teilstück mindestens a) den Offset des Teilstücks in der signierten Archivdatei oder die Position des Teilstücks in der Abfolge der Teilstücke in der signierten Archivdatei, b) die Länge des Teilstücks, wobei die Angabe der Länge genau eines Teilstücks entfallen kann, wenn bei den Informationen zur Gesamtlänge in Punkt i) die Gesamtlänge der signierten Archivdatei angegeben worden ist, c) den Hashwert des Teilstücks, wobei die Angabe des Hashwerts genau eines Teilstücks entfallen kann, wenn der Hashwert der signierten Archivdatei in Punkt ii) angegeben worden ist, und d) einen aus einer Liste der auf den 1 bis n ungesicherten Download-Servern verfügbaren Download-Adressen oder URLs ausgewählten Download-Adresse oder URL beinhaltet;
- Übertragung des verschlüsselten und/oder signierten Datenpakets vom gesicherten Haupt-Server über die gesicherte Verbindung, die insbesondere eine HTTPS- oder SSL-Verbindung ist, zum Client;
- Entschlüsselung und Analyse des Datenpakets durch den Client, Aufbau einer oder mehrerer ungesicherter Verbindungen zu den übermittelten Adressen oder URLs auf dem einen oder mehreren der ungesicherten Download-Server und Download der benötigten Teilstücke;
- Überprüfung der heruntergeladenen Teilstücke sowie des zusammengefügten Archivs auf Integrität anhand der übermittelten Hashwerte.

Zur Durchführung des erfindungsgemäßen Verfahrens dient ein Computernetzwerk, welches dadurch gekennzeichnet ist, dass es mindestens einen Clientcomputer, einen gesicherten Haupt-Server und mindestens einen ungesicherten Download-Server beinhaltet, wobei
- zwischen dem Clientcomputer und dem gesicherten Haupt-Server eine gesicherte Netzwerkverbindung, insbesondere eine HTTPS- oder eine SSL-Verbindung, hergestellt wird,
- zwischen dem Clientcomputer und dem mindestens einen ungesicherten Download-Server eine ungesicherte Netzwerkverbindung, insbesondere eine HTTP- oder eine FTP-Verbindung, hergestellt wird und
- zwischen dem gesicherten Haupt-Server und dem mindestens einen ungesicherten Download-Server eine ungesicherte Netzwerkverbindung, insbesondere eine HTTP- oder eine FTP-Verbindung, hergestellt wird.

Eine besonders bevorzugte Verwendung findet das erfindungsgemäße Verfahren bei einem Update des Clients durch den bzw. die Server. Hierbei schließt das Update im Sinne der Anmeldung sowohl reine Softwareupdates als auch Firmwareupdates oder Updates für Betriebssoftware für Geräte ein.

Für das Verfahren wird jeder Client zunächst durch die Generierung eines eindeutigen Identifiers für den kontaktierten Server exakt identifizierbar gemacht. Diese eindeutigen Identifier werden dann auf einem gesicherten Datenbank-Server in einer Datenbank abgelegt. In einer bevorzugten Ausgestaltungsvariante beinhaltet die Generierung des eindeutigen Identifiers für jeden Client mindestens die Schritte
- Zuweisung einer eindeutigen ID an jeden Client;
- Generierung eines Tokens, bestehend aus einer echten Zufallszahl, für jeden Client;
- Speicherung a) der ID und des Tokens und/oder b) der MAC-Adresse des Clients in der Datenbank auf dem gesicherten Datenbank-Server.

Im Falle eines Gerätes kann die eindeutige ID beispielsweise die Seriennummer des Gerätes sein. Zusätzlich zur ID und dem zufälligen Token kann auch noch die MAC-Adresse als weiteres eindeutiges Identifikationsmerkmal mit in den Identifier aufgenommen werden. Für einen Updatevorgang kann die Identifier-Datenbank nach Bedarf um weitere Datenfelder zu den jeweiligen Identifiern ergänzt werden, die beispielsweise Informationen über lizensierte Programm- oder Gerätefunktionen, Laufzeiten von Lizenzen oder gegebenenfalls bei einem Update zu beachtende Besonderheiten (besondere Sprachversionen, regionale Vorschriften und Bestimmungen, usw.) beinhalten.

Anschließend werden die Dateien für den Download zusammengestellt und in eine Archivdatei gepackt. Dieser Vorgang kann sowohl automatisch durch Skripte, die die Informationen aus der Datenbank benutzen, als auch durch einen Administrator oder anderweitig berechtigten menschlichen Benutzer erfolgen.

Für die Archivdatei wird dann ein Hashwert generiert und das Archiv unter Nutzung desselben signiert. Die signierte Archivdatei kann dann entweder an einem Stück weiterverwendet oder aber höchst bevorzugt in mehrere Teilstücke aufgeteilt werden. Die Teilstücke müssen dabei nicht die gleiche Größe aufweisen, sondern können vollkommen willkürlich dimensioniert werden.

Vorzugsweise werden die ein oder mehreren Teilstücke der signierten Archivdatei zusätzlich symmetrisch verschlüsselt und der verwendete Schlüssel wird zu den Informationen über die zu ladenden Teilstücke in dem übermittelten Datenpaket hinzugefügt. Dadurch kann die Sicherheit der Dateien nochmals erhöht werden. Durch die zusätzliche Verschlüsselung können die Teilstücke, denen unter Umständen noch Informationen über den Inhalt entnommen werden könnten, weder mehr als Teilstücke erkannt noch deren Inhalt analysiert werden.

Nachdem für jedes Teilstück ebenfalls ein Hashwert generiert worden ist, werden sie auf 1 bis n ungesicherten Download-Servern zum Download bereitgestellt. Eine zusätzliche symmetrische Verschlüsselung trägt den unterschiedlichen Sicherheitsniveaus von Haupt- und, weniger sicheren, Download-Servern Rechnung. Sie erfolgt derart, dass die ungesicherten Downloadserver in vordefinierten Zeitintervallen, z. B. einmal pro Tag, die symmetrisch verschlüsselten Pakete neu verschlüsseln. Eine solche symmetrische Neuverschlüsselung ist vorteilhaft, da sie wenig Rechenzeit kostet.

Der Schlüssel zur Neuverschlüsselung soll ein kryptographisch gesichertes Aktualitätsmerkmal tragen. Dies kann zum Beispiel erreicht werden, indem man den Schlüssel zur Neuverschlüsselung mittels eines Hash-Algorithmus' aus einem dem Haupt-Server und dem Download-Server gemeinsam bekannten Schlüssel und dem Tagesdatum und gegebenenfalls der aktuellen Uhrzeit errechnet, z. B. mittels des HMAC Algorithmus.

Es können immer das aktuelle Paket und das des Vortags erhalten werden und jedes ältere nach Ablauf eines festgelegten Zeitintervalls, z. B. nach einem Tag, gelöscht werden, was Speicherplatz auf den Download-Servern spart. Der Haupt-Server kann unabhängig von den Download-Servern die weiter oben genannten Informationen zu jedem Teilstück für das große Datenpaket errechnen und an den Client geben.

Die Koordination des Downloads übernimmt ein gesicherter Haupt-Server. Der Client kontaktiert den Haupt-Server zwecks Anforderung des Downloads über eine gesicherte Verbindung, bei der es sich insbesondere um eine HTTPS- oder eine SSL-Verbindung handelt. Dabei gibt er sich beim Haupt-Server mit seinem eindeutigen Identifier zu erkennen. Zur Authentifizierung des Clients überprüft der Haupt-Server durch Abfrage der Datenbank, ob der übertragene Identifier zu einem berechtigten Client gehört.

Als Antwort auf seine Downloadanfrage erhält der Client vom Haupt-Server ein Datenpaket, welches durch Verknüpfung der Gesamtlänge der signierten Archivdatei mit dem Hashwert der signierten Archivdatei und Informationen über sämtliche zu ladenden Teilstücke erzeugt wird. Für jedes Teilstück sind mindestens der Offset des Teilstücks in der signierten Archivdatei, seine Länge, sein Hashwert und ein Download-URL in diesen Informationen enthalten. Der Download-URL wird vom Haupt-Server für jeden Client gezielt ausgewählt. Vor der Übertragung des Datenpakets vom gesicherten Haupt-Server über die gesicherte Verbindung zum Client wird das Datenpalet noch verschlüsselt und/oder signiert.

Bei der Zusammenstellung der Informationen zur kompletten signierten Archivdatei bzw. deren Teilstücken ist es möglich, jeweils auf eine Angabe zu verzichten, da diese aus den anderen berechnet werden kann. So kann beispielsweise die Gesamtlänge wegegelassen werden, wenn die Länge sämtlicher Teilstücke bekannt ist. Ebenso ergibt sich zwangsweise die Position des letzten Teilstücks der Archivdatei, wenn für alle anderen Teilstücke entweder die Position oder der Offset bekannt sind. Für den Download ist eine Verknüpfung mit der Teilstücklänge sinnvoll, damit auch bei der Positionsangabe die Teilstücke gleich an die richtige Stelle in einer Temporärdatei geschrieben werden können und nicht erst die Fertigstellung des Downloads aller Teilstücke abgewartet werden muss. Schließlich gilt auch für die Hashwerte, dass die Korrektheit des letzten Teilstücks gegeben sein muss, wenn die Hashwerte für die restlichen Teilstücke sowie die Gesamtdatei korrekt sind. Prinzipiell würde es hier auch ausreichen, nur den Hashwert der Gesamtdatei zu übermitteln, da somit auch alle Teilstücke korrekt und unmanipuliert übertragen worden sein müssen. Für den Download ist es jedoch vorteilhafter, auch die Hashwerte der Teilstücke zu kennen, da dann im Falle einer fehlerhaften Übertragung eines Teilstückes dieses gleich erneut heruntergeladen werden kann, ohne auf die Komplettierung des gesamten Downloads warten zu müssen.

Der Client entschlüsselt dann gegebenenfalls das erhaltene Datenpaket und analysiert die Informationen zu den Teildownloads. Anschließend baut er eine oder mehrere ungesicherte Verbindungen zu den übermittelten URLs auf dem einen oder mehreren Download-Servern auf, um die Teilstücke herunter zu laden. Sind die Teilstücke komplett, werden sie mit Hilfe ihres übermittelten Hashwertes überprüft, um eine fehlerfreie Übertragung sicherzustellen. Die überprüften Teilstücke werden dann zur Archivdatei zusammengesetzt und diese wiederum mit ihrem Hashwert geprüft.

Eine Ausgestaltungsvariante des erfindungsgemäßen Verfahrens sieht vor, dass der Inhalt der Archivdatei für alle Clients identisch ist. Somit erhalten alle Clients einen einheitlichen und vollständigen Dateiensatz und die für den Benutzer zur Verfügung stehenden Funktionen werden anhand von Lizenzinformationen o. ä. ermittelt. Erwirbt der Benutzer zwischen zwei Updates eine Lizenz für weitere Funktionen, so müssen diese nur mittels einer übermittelten Lizenzinformation freigegeben werden. Es brauchen aber keine Programmdateien nachgeladen zu werden. Dies vereinfacht auch das Management der Updatepakete durch den Anbieter.

Alternativ hierzu werden die Dateien für das Downloadarchiv für jeden Client individuell zusammengestellt. Die Zusammenstellung erfolgt bevorzugt durch den gesicherten Haupt-Server. Es ist jedoch auch möglich, dass der Haupt-Server diese Aufgabe nicht selbst erledigt, sondern an einen oder mehrere im lokalen Netzwerk verbundene Rechner weiterreicht. Der gesicherte Haupt-Server ist in diesem Fall dann nicht als Einzelrechner zu verstehen, sondern als Rechnerverbund oder Cluster. Eine solche Ausgestaltung des Haupt-Servers als Konstrukt aus mehreren vernetzten Einzelrechnern ist im gesamten Bereich der vorliegenden Anmeldung als mitoffenbart anzusehen.

Ganz besonders bevorzugt erfolgt die individuelle Zusammenstellung der Dateien für das Downloadarchiv anhand von einem oder mehreren Merkmalen, die zusätzlich zu den eindeutigen Identifiern in der Datenbank abgelegt sind. Damit kann man den Download für jeden Client auf das Minimum begrenzen, indem man beispielsweise nur die Dateien für lizensierte Funktionen überträgt. Ferner können regionsspezifische Dateien wie Zeichensätze und Sprachdateien berücksichtigt werden. Außerdem ermöglicht es dem Anbieter, einer Gruppe oder auch einzelnen Clients (z. B. Betatester) gezielt eine besondere Version der Software zur Verfügung zu stellen oder umgekehrt sie davon auszuschließen (z. B. bekannte Inkompatibilitäten, rechtliche Einschränkungen).

Eine bevorzugte Ausgestaltungsvariante der Erfindung sieht vor, dass die auf den Download-Servern bereitgestellten Dateien in ihrer Größe nicht den zu ladenden Teilstücken entsprechen und zu den Informationen über die zu ladenden Teilstücke in dem übermittelten Datenpaket die Angabe eines entsprechenden Download-Offsets hinzugefügt wird. Mit Hilfe dieser Technik lassen sich zweierlei Vorteile erzielen. Zum einen kann man dadurch einen weiteren Sicherheitsgewinn erzielen, indem die zu ladenden Teilstücke nicht als solche auf den Download-Servern gespeichert werden, sondern um zufällige Daten davor und/oder dahinter ergänzt als Datei dort abgelegt werden. Da der Client aus seinem empfangenen Datenpaket sowohl die exakte Länge des Teilstückes als auch den Download-Offset kennt, kann er ausschließlich das Teilstück laden, während ein Angreifer nicht weiß, was Datenmüll und was benötigter Dateiteil ist.

Zum anderen können die Download-Server auch eine komplette Archivdatei vorhalten anstelle von einer Vielzahl an Teilstückdateien. Der Haupt-Server kann dann vollkommen flexibel zu ladende Teilstücke definieren, ohne dass neue Teilstückdateien von ihm zu den Download-Servern übertragen werden müssen. Er muss lediglich die passenden Hashwerte berechnen und zusammen mit den neuen Offsets und Teilstücklängen an die Clients übermitteln.

Höchst bevorzugt findet für die Archivdatei ein gzip- oder Izma-komprimiertes Tar-Archiv Verwendung. Durch die Kombination eines Tarballs mit dem GZIP- oder LZMA-Kompressionsalgorithmus lassen sich sehr gute Kompressionsraten erzielen und die erzeugten Archivdateien haben den Vorteil, dass sich die Daten nur dann wiederherstellen lassen, wenn die Archivdatei komplett ist.

In einer besonders bevorzugten Ausgestaltungsvariante erfolgt die Verbindung zwischen den Clients und den Servern über ein WAN, insbesondere das Internet. Daneben eignet sich das Verfahren natürlich auch für ein LAN, beispielsweise ein Firmennetzwerk, bei dem die Rechner einer größeren Firma über einen zentralen Server mit Softwareupdates versorgt werden.

Vorzugsweise trifft der gesicherte Haupt-Server die Auswahl des oder der ungesicherten Server für den Download des anfragenden Clients anhand der kürzest möglichen Entfernung oder der geografischen Region, die mittels der IP-Adressen ermittelt wird und/oder in der Datenbank für jeden Client hinterlegt ist, und/oder des Erreichens vorgegebener Übertragungsvolumina. Durch diese Auswahlkriterien hat der Haupt-Server die Möglichkeit, einen möglichst raschen Download für den Client sicherzustellen und neben einem Loadbalancing der Download-Server auch Rücksicht auf etwaigen Freitraffic bei angemieteten Servern zu nehmen. Für den Fall, dass das Freivolumen des laufenden Monats bei einem Server erreicht ist, kann der Haupt-Server diesen einfach für den Rest des Monats bei der URL-Übermittlung an die Clients aussparen und so die Betriebskosten niedrig halten.

Der gesicherte Haupt-Server kann gemäß einer weiteren Ausgestaltungsform auch gleichzeitig als Datenbank-Server und/oder Download-Server fungieren. Eine derartige Aufgabenkombination ist vor allem dann interessant, wenn der Haupt-Server nicht als Einzelrechner auftritt, sondern wie oben beschrieben als Rechnerverbund. Die Möglichkeit, dass der Haupt-Server auch als Download-Server agieren kann, ist auch im Hinblick auf eine Verfügbarkeitssicherung nützlich.

Ferner kann vorgesehen sein, dass die Archivdatei vor dem Hashen und der Signatur um ein Manifest erweitert wird, das Informationen über die in der Archivdatei enthaltenen Dateien enthält, insbesondere Versions- und Kompatibilitätsinformationen, und in das übermittelte Datenpaket zusätzlich eine Versionsnummer und/oder eine Beschreibung des Archivs eingebunden werden. Somit können für Updates wichtige Informationen über die enthaltenen Dateien übermittelt werden, die eine Installationsroutine verwenden kann.

Ein praktisches Problem in jedem System verteilter Datenquellen besteht in der Verfügbarkeit der einzelnen Server, die unter loser oder enger Kontrolle des Haupt-Servers als zentraler Verwaltungsinstanz stehen können, oder auch nicht. Der Hauptserver kann in üblichen Architekturen nach dem Stand der Technik selbst seinen Pool an Download-Servern überwachen und auf nicht erreichbare Server in den nächsten Datenpaketen nicht mehr verweisen. Dadurch erfährt er aber nicht, ob Kommunikationsprobleme zwischen Download-Servern und Client-Systemen, also Download-Senken, bestehen. Dies kann zum Beispiel der Fall sein, wenn auf Clientseite durch Fehlkonfiguration oder Firewalls Download-Server blockiert werden.

Ein bevorzugtes Verfahren, solche unerwünschten Zustände zu verhindern, besteht darin, durch Rückmeldungen von den Download-Servern an den Haupt-Server solche Problemzustände zu ermitteln. In einer Erreichbarkeitstabelle, geordnet nach Download-Server/Client-Verknüpfungen, werden sodann diese Probleme einzeln verzeichnet. Eine automatisierte Verwaltungs-Strategie kann dann darin bestehen, problematische Verbindungen bei weiteren Versuchen auszusparen oder generell nicht verfügbare Download-Server für alle Clients zu überspringen. Mit geeigneten, bekannten Auswertungstools kann die Erreichbarkeitstabelle Administratoren zur Fehlerbehebung dienen.

Durch die - um Diagnose-relevante Daten wie Portnummern, Fehlermeldungen und einzelne Protokollnachrichten oder -logs angereicherte - Erreichbarkeitstabelle kann weiterhin einer verteilten Diagnose von technischen Problemen der Download-Server dienen. Gewisse Fehlerzustände der Download-Server können unter Umständen sogar nur von Client-Seite sicher erkannt werden, z. B. stelle man sich vor, die Firewall des Download-Servers lasse aufgrund von Fehlkonfiguration administrative Verbindungen zwischen Haupt-Server und Download-Server via VPN zu, aber keine Downloads von Clients von außen.

Weitere Ausgestaltungen dieser allgemeinen Vorgehensweise folgen:

Wenn Clients nach dem Download und/oder Update eine Rückmeldung an den Haupt-Server übertragen, kann dieser dadurch auch erfahren, ob einzelne Clients individuelle Probleme haben, z. B. durch eine Firewall, lokale Routingproblemeoder falsch konfigurierte MTUs im Router. Außerdem kann der Haupt-Server Statistiken führen, wenn der Client nicht nur Erfolg oder Misserfolg des Updates und/oder des Downloads jeden Teilstücks oder tägliche Informationen o. ä. liefert, sondern auch die Geschwindigkeit und Dauer überträgt. Aufbauend auf dieser Information kann der Haupt-Server z. B. ermitteln und lernen, welcher ungesicherte Download-Server sich für welchen Client, welches Providernetz oder welche Region am besten eignet.

Außerdem lassen sich so wesentlich zuverlässiger defekte Download-Server erkennen, als wenn der Haupt-Server die Download-Server direkt auf Erreichbarkeit prüft (siehe den oben erwähnten Fall, dass die Firewall des Download-Servers aufgrund einer Fehlkonfiguration administrative Verbindungen zwischen Haupt-Server und Download-Server via VPN zulässt, aber keine Downloads von Clients von außen).

## Patentansprüche

1. Verfahren zum gesicherten Download von verteilten Downloadsourcen, mindestens beinhaltend die Schritte:
- Generierung eines eindeutigen Identifiers für jeden Client;
- Speicherung der eindeutigen Identifier in einer Datenbank auf einem gesicherten Datenbank-Server;
- Zusammenstellen der Dateien für den Download;
- Packen der Dateien in eine Archivdatei;
- Generierung eines Hashwertes für die Archivdatei und Signatur der Archivdatei unter Nutzung desselben;
- Aufteilung der signierten Archivdatei in ein oder mehrere Teilstücke;
- Generierung eines Hashwertes für jedes Teilstück;
- Symmetrische Verschlüsselung der ein oder mehreren Teilstücke der signierten Archivdatei und Hinzufügen des verwendeten Schlüssels zu den Informationen über die zu ladenden Teilstücke in dem übermittelten Datenpaket;
- Bereitstellen der ein oder mehreren Teilstücke zum Download auf 1 bis n ungesicherten Download-Servern, wobei die ungesicherten Download-Server die symmetrisch verschlüsselten Pakete in vordefinierten Zeitintervallen neu verschlüsseln, wobei die dazu eingesetzten Schlüssel bevorzugt ein kryptographisch gesichertes Aktualitätsmerkmal tragen, welches insbesondere durch Errechnung des neuen Schlüssels aus einem dem Haupt-Server und dem Download-Server gemeinsam bekannten Schlüssel und dem Tagesdatum, welches zusätzlich mit der aktuellen Uhrzeit ergänzt werden kann, erzeugt wird;
- Anforderung des Downloads durch einen Client bei einem gesicherten Haupt-Server über eine gesicherte Verbindung, insbesondere eine HTTPS- oder SSL-Verbindung, wobei sich der Client beim Haupt-Server mit seinem eindeutigen Identifier identifiziert;
- Authentifizierung des Clients durch den Haupt-Server mittels Vergleich des übertragenen Identifiers mit den in der Datenbank als berechtigt hinterlegten Clients;
- Verknüpfung von i) Informationen zur Gesamtlänge der signierten Archivdatei, wobei die Angabe der Informationen zur Gesamtlänge auch implizit durch eine deren Berechnung gestattende Angabe aller Teilstücklängen erfolgen kann, und ii) deren Hashwert, wobei die Angabe des Hashwerts entfallen kann, wenn die Hashwerte aller Teilstücke in Punkt iii) enthalten sind, mit iii) Informationen über die zu ladenden Teilstücke zu einem Datenpaket und Verschlüsselung und/oder Signatur des erzeugten Datenpakets, wobei die Informationen über die zu ladenden Teilstücke für jedes Teilstück mindestens a) den Offset des Teilstücks in der signierten Archivdatei oder die Position des Teilstücks in der Abfolge der Teilstücke in der signierten Archivdatei, b) die Länge des Teilstücks, wobei die Angabe der Länge genau eines Teilstücks entfallen kann, wenn bei den Informationen zur Gesamtlänge in Punkt i) die Gesamtlänge der signierten Archivdatei angegeben worden ist, c) den Hashwert des Teilstücks, wobei die Angabe des Hashwerts genau eines Teilstücks entfallen kann, wenn der Hashwert der signierten Archivdatei in Punkt ii) angegeben worden ist, und d) einen aus einer Liste der auf den 1 bis n ungesicherten Download-Servern verfügbaren Download-Adressen oder URLs ausgewählten Download-Adresse oder URL beinhaltet;
- Übertragung des verschlüsselten und/oder signierten Datenpakets vom gesicherten Haupt-Server über die gesicherte Verbindung, die insbesondere eine HTTPS- oder SSL-Verbindung ist, zum Client;
- Entschlüsselung und Analyse des Datenpakets durch den Client, Aufbau einer oder mehrerer ungesicherter Verbindungen zu den übermittelten Adressen oder URLs auf dem einen oder mehreren der ungesicherten Download-Server und Download der benötigten Teilstücke;
- Überprüfung der heruntergeladenen Teilstücke sowie des zusammengefügten Archivs auf Integrität anhand der übermittelten Hashwerte.

2. Verfahren nach Anspruch 1, **dadurch gekennzeichnet, dass** die Generierung des eindeutigen Identifiers für jeden Client mindestens die Schritte
- Zuweisung einer eindeutigen ID an jeden Client;
- Generierung eines Tokens, bestehend aus einer echten Zufallszahl, für jeden Client;
- Speicherung a) der ID und des Tokens und/oder b) der MAC-Adresse des Clients in der Datenbank auf dem gesicherten Datenbank-Server
beinhaltet.

3. Verfahren nach Anspruch 1 und 2, **dadurch gekennzeichnet, dass** der Inhalt der Archivdatei für alle Clients identisch ist.

4. Verfahren nach Anspruch 1 und 2, **dadurch gekennzeichnet, dass** die Zusammenstellung der Dateien für das Downloadarchiv durch den gesicherten Haupt-Server für jeden Client individuell erfolgt.

5. Verfahren nach Anspruch 4, **dadurch gekennzeichnet, dass** die individuelle Zusammenstellung der Dateien für das Downloadarchiv anhand von einem oder mehreren Merkmalen, die zusätzlich zu den eindeutigen Identifiern in der Datenbank abgelegt sind, erfolgt.

6. Verfahren nach den Ansprüchen 1 bis 5, **dadurch gekennzeichnet, dass** die auf den Download-Servern bereitgestellten Dateien in ihrer Größe nicht den zu ladenden Teilstücken entsprechen und zu den Informationen über die zu ladenden Teilstücke in dem übermittelten Datenpaket die Angabe eines entsprechenden Download-Offsets hinzugefügt wird.

7. Verfahren nach den Ansprüchen 1 bis 6, **dadurch gekennzeichnet, dass** die Archivdatei ein gzip- oder Izma-komprimiertes Tar-Archiv ist.

8. Verfahren nach den Ansprüchen 1 bis 7, **dadurch gekennzeichnet, dass** die Verbindung zwischen den Clients und den Servern über ein WAN, insbesondere das Internet, erfolgt.

9. Verfahren nach den Ansprüchen 1 bis 8, **dadurch gekennzeichnet, dass** der gesicherte Haupt-Server die Auswahl des oder der ungesicherten Server für den Download des anfragenden Clients anhand der kürzest möglichen Entfernung oder der geografischen Region, die mittels der IP-Adressen ermittelt wird und/oder in der Datenbank für jeden Client hinterlegt ist, und/oder des Erreichens vorgegebener Übertragungsvolumina trifft.

10. Verfahren nach den Ansprüchen 1 bis 9, **dadurch gekennzeichnet, dass** der gesicherte Haupt-Server gleichzeitig auch als Datenbank-Server und/oder Download-Server fungiert.

11. Verfahren nach den Ansprüchen 1 bis 10, **dadurch gekennzeichnet, dass** die Archivdatei vor dem Hashen und der Signatur um ein Manifest erweitert wird, das Informationen über die in der Archivdatei enthaltenen Dateien enthält, insbesondere Versions- und Kompatibilitätsinformationen, und in das übermittelte Datenpaket zusätzlich eine Versionsnummer und/oder eine Beschreibung des Archivs eingebunden werden.

12. Verfahren nach den Ansprüchen 1 bis 11, **dadurch gekennzeichnet, dass** der Client Informationen zu Erfolg oder Misserfolg eines Downloadversuchs und/oder Downloaddauer und -geschwindigkeit und/oder Erreichbarkeit der Download-Server an den Haupt-Server zurückübermittelt.

13. Verwendung des Verfahrens nach den Ansprüchen 1 bis 12 zum Erhalten von Daten für einen Updatevorgang auf dem Client.

## Claims

1. Process for secure downloads from spread download sources containing at least the steps:
- Generating a unique identifier for each client;
- Saving the unique identifier in a database on a secured database server:
- Compiling the files for the download;
- Packing the files in an archive file;
- Generating a hash value for the archive file and signature of the archive file under use of the same;
- Dividing the signed archive file into one or several partial portions;
- Generating a hash value for each partial portion;
- Symmetrically encrypting the one or several partial portions of the signed archive file and adding the used key to the information about the partial portions to be loaded in a transmitted data packet;
- Making available the one or more partial portions for download on 1 to n unsecured download servers, whereby the unsecured download servers encrypt the symmetrically encrypted packets anew in pre-defined time intervals, whereby the keys used for this carry preferably a cryptographically secured currency feature which is generated in particular through computation of the new key from a key known by both the main server and the download server and the current date which can be completed in addition with the current time;
- Requesting the download via a client with a secured main server over a secured connection, in particular a HTTPS or SSL connection, whereby the client identifies itself to the main server with its unique identifier;
- Authenticating the clients by the main server using a comparison of the transferred identifier with the authorised clients which were added to the database;
- Linking i) information on the overall length of the signed archive file, whereby the indication of information on the overall length can also occur implicitly by its calculating licensing indication of all partial portion lengths, and ii) their hash value, whereby the indication of the hash value can be omitted if the hash values of all partial portions are contained in point iii), with iii) information on the partial portions to be loaded to a data packet and encryption and/or signature of the generated data packet, whereby the information about the partial portions to be loaded for each partial portion contains at least a) the offset of the partial portion in the signed archive file or the position of the partial portion in the sequence of partial portions in the signed archive file, b) the length of the partial portion, whereby the indication of the exact length of a partial portion can be omitted if, for the information on the overall length in part i), the overall length of the signed archive file was indicated, c) the hash value of the partial portion, whereby the indication of the hash value of one precise partial portion can be omitted if the hash value of the signed archive file in part ii) was indicted, and d) one of the download addresses or URLs available on the list of 1 to n unsecured download servers contains selected download addresses or URLs:
- Transmitting the encrypted and/or signed data packets from the secured main server via the secured connection which is, in particular, a HTTPS or SSL connection, to the client;
- Decrypting and analysing the data packets by the client, setting up of one or several unsecured connections to the transmitted addresses or URLS on the one or several unsecured download servers and downloading the required partial portions;
- Checking the downloaded partial portions and the assembled archives for integrity using the transmitted hash values.

2. Method according to claim 1, **characterised in the way** that the generation of the unique identifier for each client contains at least the steps:
- Issuing a unique ID to each client;
- Generating a token, consisting of a true random number, for each client;
- Saving a) the ID and the token and/or b) the MAC address of the client in the database on the secured database server.

3. Method according to claims 1 and 2, **characterised in the way** that the content of the archive file is identical for all clients.

4. Method according to claims 1 and 2, **characterised in the way** that the compilation of the files for the download archive occurs for each client individually via the secured main server.

5. Method according to claim 4, **characterised in the way** that the individual compilation of the files for the download archive occurs using one or several features which, in addition to the unique identifiers, are filed in the database,

6. Method according to claims 1 to 5, **characterised in the way** that the files prepared on the download servers do not correspond to the partial portions to be loaded in terms of size and that the indication of a corresponding download offset is added to the information about the partial portions to be loaded in the transmitted data packet,

7. Method according to claims 1 to 6, **characterised in the way** that the archive file is a gzip or Izma compressed tar archive.

8. Method according to claims 1 to 7, **characterised in the way** that the connection between the clients and the servers occurs over a WAN, in particular the internet.

9. Method according to claims 1 to 8, **characterised in the way** that the secured main server selects the unsecured server or servers for the download of the requesting client using the shortest possible distance or the geographical region which is determined using IP addresses and/or filed in the database for each client, and/or the achievement of the dictated transmission volumes.

10. Method according to claims 1 to 9, **characterised in the way** that the secured main server can act as the database server and/or download server.

11. Method according to claims 1 to 10, **characterised in the way** that the archive file s expanded before being hashed and signed by a manifest which contains information about the files contained within the archive file, in particular version and compatibility information, Also integrated into the transmitted data packet is a version number and/or a description of the archive,

12. Method according to claims 1 to 11, **characterised in the way** that client information on the success or failure of a download attempt and/or download duration and speed and/or reachability of the download server is relayed back to the main server.

13. Use of the method according to claims 1 to 12 to receive data for an update procedure on the client.

## Revendications

1. Procédé de téléchargement sécurisé à partir de sources de téléchargement réparties, comportant au moins les étapes suivantes :
- création d'un identifiant unique pourchaque client :
- enregistrement de l'identifiant unique dans une .base de données sur un serveur de base de données sécurisé ;
- assemblage des fichiers pour le téléchargement ;
- compression des fichiers dans un fichier d'archive ;
- création d'une valeur de hachage pour le fichier d'archive et signature du fichier d'archive en utilisant la même valeur;
- découpage du fichier d'archive signé en un ou plusieurs morceaux ;
- création d'une valeur de hachage pour chaque morceau ;
- cryptage symétrique du ou des morceaux du fichier d'archive signé et ajout de la clé utilisée aux informations relatives aux morceaux à télécharger dans le paquet de données transmis ;
- mise à disposition du ou des morceaux à télécharger sur 1 à n serveurs non sécurisés, les serveurs non sécurisés recryptant les paquets cryptés symétriquement dans des intervalles de temps prédéfinis, les clés utilisées à cet effetportant de préférence une caractéristique d'actualité sécurisée par cryptographie, laquelle est générée notamment par le calcul de la nouvelle clé à partir d'une clé connue du serveur principal et du serveur de téléchargement et à partir de la date du jour, qui peut être complétée par l'heure correspondante ;
- demande de téléchargement émise par un client sur un serveur principal sécurisé via une connexion sécurisée, notamment une connexion HTTPS ou SSL, le client s'identifiant sur le serveur principal avec son identifiant unique ;
- authentification du client par le serveur principe au moyen de la comparaison de l'identifiant attribué avec les clients enregistrés dans la base de données comme étant autorisés ;
- association i) des informations relatives à la longueur totale du fichier d'archive signé, ces informations pouvant également être fournies de manière implicite par une indication de toutes les longueurs des morceaux permettant le calcul de la longueur totale, et ii) de la valeur de hachage du fichier d'archive, l'indication de cette valeur de hachage pouvant être supprimée si les valeurs de hachage de tous les morceaux figurent au point iii), avec iii) des informations relatives aux morceaux à télécharger sur un paquet de données et un cryptage et/ou une signature du paquet de données généré, les informations relatives, aux morceaux à télécharger contenant au moins a) l'offset du morceau dans le fichier d'archive signé ou la position du morceau dans l'ordre des morceaux: dans le fichier d'archive signé, b) la longueur du morceau, l'indication de la longueur d'un morceau pouvant être supprimée si, dans les informations concernant la longueur totale au point i), la longueur totale du fichier d'archive signé a été indiquée, c) la: valeur de hachage du morceau, l'indication de la valeur de hachage du morceau pouvant être supprimée si la valeur de hachage du fichier d'archive a été indiquée au point ii), et d) une adresse de téléchargement ou un URL choisie à partir d'une liste d'adresses de téléchargement ou d'URL disponibles, sur les 1 à n serveurs de téléchargement non sécurisés ;
- transfert au client du paquet de données crypté et/ou signé sur le serveur principal sécurisé via une connexion sécurisée, notamment une connexion HTTPS ou. SSL ;
- cryptage et analyse du paquet de données par le client, mise en place d'une ou plusieurs connexions non sécurisées avec les adresses ou les URL transmises sur un ou plusieurs des serveurs de téléchargement non sécurisés et téléchargement des morceaux nécessaires ;
- vérification de l'intégrité des morceaux téléchargés ainsi que de l'archive assemblée à l'aide des valeurs de hachage transmises.

2. Procédé selon la revendication 1, **caractérisé en ce que** la création de l'identifiant unique pour chaque client contient au moins les étapes suivantes :
- attribution d'un identifiant unique à chaque client ;
- création d'un token composé d'une véritable combinaison aléatoire, pour chaque client ;
- enregistrement a) de l'identifiant et du token et/ou b) de l'adresse MAC du client dans la base de données sur le serveur de base de données sécurisé.

3. Procédé selon les revendications 1 et 2. **caractérisé en ce que** le contenu du fichier d'archive est identique pour tous les clients.

4. Procédé selon les revendications 1 et 2, **caractérisé en ce que** l'assemblage des fichiers pour l'archive de téléchargement est effectué individuellement pour chaque client via le serveur principal sécurisé.

5. Procédé selon la revendication 4, **caractérisé en ce que** l'assemblage individuel des fichiers pour l'archive de téléchargement est effectué sur la base d'une ou plusieurs caractéristiques qui, en plus des identifiants uniques, sont archivées dans la base de données.

6. Procédé selon les revendications 1 à 5, **caractérisé en ce que** les fichiers mis à disposition sur les serveurs de téléchargement ne correspondent pas aux morceaux à télécharger en termes de taille, et **en ce que** l'indication d'un offset de téléchargement correspondant est ajouté aux informations relatives aux morceaux à télécharger dans le paquet de données transmis.

7. Procédé selon les revendications 1 à 6, **caractérisé en ce que** le fichier d'archive est une archive créée par tar et compressée par gzip ou Izma.

8. Procédé selon les revendications 1 à 7, **caractérisé en ce que** la connexion entre les clients et les serveurs s'effectue via un WAN, notamment Internet.

9. Procédé selon les revendications 1 à 8, **caractérisé en ce que** le serveur principal sécurisé choisit le ou les serveurs) sécurisé(s) pour le téléchargement du client ayant émis la demande, sur la base de la plus courte distance possible ou de la région géographique déterminée au moyen des adresses IP et/ou enregistrée dans la base de données pour chaque client, et/ou de l'obtention des volumes de transfert prédéfinis.

10. Procédé selon les revendications 1 à 9. **caractérisé en ce que** le serveur principal sécurisé fait parallèlement office de serveur de base de données et/ou de serveur de téléchargement

11. Procédé selon les revendications 1 à 10. **caractérisé en ce que** le fichier d'archive est, avant le hachage et la signature, enrichi d'un manifeste comprenant des informations au sujet des fichiers contenus dans le fichier d'archive, notamment les informations relatives à la version et à la compatibilité, et **en ce qu'**un numéro de version et/ou une description de l'archive sont intégrés dans le paquet de données transmis.

12. Procédé selon les revendications 1 à 11, **caractérisé en ce que** le client transmet en retour des informations relatives au succès ou de l'échec d'une tentative de téléchargement et/ou à la durée et à la vitesse de téléchargement et/ou à l'accessibilité du serveur de téléchargement sur le serveur principal.

13. Utilisation du procédé selon les revendications 1 à 12 en vue d'obtenir les données nécessaires à la mise en place d'un processus de mise à jour par le client.
